# EUROPÄISCHE PATENTANMELDUNG

(11) **EP 4 357 660 A1**
(43) Veröffentlichungstag der Anmeldung: **24.04.2024**
(21) Anmeldenummer: 22202960.5
(22) Anmeldetag: 21.10.2022
(51) Int. Cl.: F16M 1/00

(54) **MASCHINENRAHMEN UND BEFESTIGUNGSANORDNUNG AUS EINEM MASCHINENRAHMEN UND WENIGSTENS EINEM BEFESTIGUNGSELEMENT**

(71) Anmelder: SOMIC Verpackungsmaschinen GmbH & Co. KG, 83123 Amerang (DE)
(72) Erfinder: OBERMAYER, Josef, 83083 Riedering (DE); LIPP, Josef, 83561 Ramerberg (DE); SCHROTT, Matthias, 83308 Trostberg (DE)
(74) Vertreter: Weickmann & Weickmann PartmbB

(57) **Zusammenfassung**

Die Erfindung betrifft einen Maschinenrahmen (100), insbesondere für eine Verpackungsmaschine, umfassend eine Mehrzahl von Trägern (102, 104), nämlich wenigstens einen Längsträger (102) und wenigstens einen Querträger (104). Der erfindungsgemäße Maschinenrahmen ist dadurch gekennzeichnet, dass wenigstens einer der Träger (102, 104) von einem Profilelement (110) mit einem offenen Profil gebildet ist. Gemäß einem zweiten Gesichtspunkt betrifft die Erfindung eine Befestigungsanordnung umfassend einen erfindungsgemäßen Maschinenrahmen (100) und wenigstens ein Befestigungselement zur Befestigung einer Funktionsbaugruppe (108) an einem Profilelement (110) durch Eingriff in wenigstens ein Montageloch (124).

## Beschreibung

Die Erfindung betrifft einen Maschinenrahmen, insbesondere für eine Verpackungsmaschine.

Obwohl der erfindungsgemäße Maschinenrahmen auch bei anderen Arten von Maschinen vorteilhaft eingesetzt werden kann, wird er aus Gründen der plastischeren Darstellung nachstehend am Beispiel einer Verpackungsmaschine erläutert werden.

Aus dem Stand der Technik bekannte Verpackungsmaschinen, in denen Produkte oder Produktgruppen in einen Verpackungsbehälter, beispielsweise einen Karton, einen Kunststoffbehälter oder dergleichen, verpackt werden, weisen einen Maschinenrahmen auf, an dem die zum Verpacken erforderlichen Funktionsbaugruppen der Verpackungsmaschine montiert sind. Bei einer bekannten Bauweise umfasst ein derartiger Maschinenrahmen Längsträger, die sich im Wesentlichen parallel zur Längsrichtung der Verpackungsmaschine erstrecken, welche im Wesentlichen mit der Arbeitsfortschrittsrichtung der Verpackungsmaschine zusammenfällt, Querträger, die sich im Wesentlichen in Querrichtung der Verpackungsmaschine, also im Wesentlichen orthogonal zur Längsrichtung, erstrecken, sowie Ständer, die sich im Wesentlichen in Höhenrichtung der Verpackungsmaschine erstrecken.

Um eine ausreichende Steifigkeit des Maschinenrahmens sicherstellen zu können, sind die Längs- und Querträger üblicherweise aus Profilelementen, wie Rohren, Strangpressprofilen oder dergleichen, ausgebildet. Zur Befestigung der die Funktionsbaugruppen tragenden Querträger werden Löcher in diese Profilelemente eingebracht. Dies ist insofern nachteilig, als bei einer Modifikation der Verpackungsmaschine, die mit einer Verlagerung einer der Funktionsbaugruppen in Längsrichtung einhergeht, an den bisherigen Befestigungsstellen der Funktionsbaugruppe Durchbrechungen im Längsträger zurückbleiben, durch welche Staub und Schmutz und gegebenenfalls sogar Ungeziefer in das Profilelement eindringen können. Um ausreichende Hygiene gewährleisten zu können, muss daher dafür Sorge getragen werden, dass alle zurückbleibenden Durchbrechungen verschlossen werden. Dies wird zum einen als umständlich und aufwändig empfunden und kann zum anderen die Flexibilität der Anordnung der Funktionsbaugruppen beeinträchtigen.

Es ist Aufgabe der vorliegenden Erfindung, hier Abhilfe zu schaffen.

Erfindungsgemäß wird diese Aufgabe durch einen Maschinenrahmen gelöst, insbesondere einen Maschinenrahmen für eine Verpackungsmaschine, der eine Mehrzahl von Trägern umfasst, nämlich wenigstens einen Längsträger und wenigstens einen Querträger, und bei dem wenigstens einer der Träger von einem Profilelement mit einem offenen Profil gebildet ist.

Da das Profilelement ein offenes Profilelement aufweist, sind sämtliche Oberflächen des Profilelements der Reinigung mittels Saugern, Gebläsen und sonstigem Reinigungsgerät zugänglich. Aufgrund der Offenheit seines Profils weist das Profilelement zwar keine gute Torsionssteifigkeit gegenüber Verwindungen um eine parallel zur Längsachse verlaufende Richtung auf. Die Erfinder haben aber erkannt, dass dieser Nachteil durch die Verbindung der Querträger, an denen die Funktionsbaugruppen montiert sind, mit den Längsträgern, überwunden werden kann, so dass insgesamt doch ein torsionssteifer Maschinenrahmen bereitgestellt werden kann.

Grundsätzlich kann das Profilelement aus jedem geeigneten Material hergestellt werden. Beispielsweise können hierfür Faserverbundwerkstoffe, Metallschäume, Maschinenbeton, Industriekeramik und dergleichen eingesetzt werden. Diese Materialien werden aber aufgrund ihrer Herstellungskosten überwiegend für Spezialanwendungen zu Einsatz kommen, beispielsweise Faserverbundwerkstoffe, wenn es im Hinblick auf Messgeräte auf eine besonders hohe Formstabilität, insbesondere mit geringer Wärmeausdehnung, ankommt.

Im Hinblick auf die Erdung des Maschinenrahmens ist es vorteilhaft, wenn das Profilelement aus einem elektrisch leitfähigen Material gefertigt ist. Im günstigsten Fall kann der gesamte Maschinenrahmen als ein einziger Erdungspunkt angesehen werden, so dass er nur an einer einzigen Stelle geerdet zu werden braucht. Dafür kann es jedoch erforderlich sein, an Anschluss- und/oder Verbindungsstellen eine etwaig vorhandene Passivierungsschicht an der Oberfläche der Profilelemente, beispielsweise eine dort vorhandene Oxidschicht, zu durchstoßen. Bei der Verwendung von an sich isolierenden Materialien kann eine ausreichende elektrische Leitfähigkeit beispielsweise durch die Zugabe leitfähiger Fasern, etwa Graphitfasern, in ausreichender Menge erreicht werden.

Aus Kosten- und/oder Verarbeitungsgründen ist es aber für die überwiegende Mehrzahl von Anwendungen vorzuziehen, wenn das Profilelement aus Metallblech gefertigt ist. Im Hinblick auf die Stabilität des Trägers kann das Metallblech beispielsweise ein Stahlblech sein. Stahl hat gegenüber anderen metallischen Materialien den Vorteil, bei vergleichsweise geringen Gestehungskosten einen vergleichsweise hohen Elastizitätsmodul aufzuweisen. Im Vergleich beispielsweise zu Aluminium verfügt Stahl über einen etwa um den Faktor 3 höheren Elastizitätsmodul. Das Stahlblech kann beispielsweise ein einfaches Stahlblech sein, das gewünschtenfalls verzinkt sein kann, oder ein Edelstahlblech. Beispielsweise kann das Metallblech ein V2A-Stahlblech sein, etwa ein 1.4301-Edelstahlblech. Ferner kann das Metallblech eine Dicke von wenigstens 3 mm aufweisen.

Unbeschichtetes, allenfalls verzinktes, Stahlblech hat den Vorteil, in sich leitfähig zu sein. Somit kann das Profilelement als ein einziger Massepunkt angesehen werden, so dass im Vergleich mit bekannten Maschinenrahmen die Verwendung gesonderter Erdungskabel zumindest reduziert werden bzw. auf sie vollständig verzichtet werden kann, was die Gestehungskosten und den Montageaufwand für den Maschinenrahmen weiter senkt. Im günstigsten Fall kann die Erdung der Funktionsbaugruppen einfach durch deren Befestigung an dem Profilelement erfolgen.

Zur Vereinfachung der Herstellung des Profilelements ist es ferner vorteilhaft, wenn es als Biegeprofil hergestellt ist. Zudem haben Biegeprofile den Vorteil, dass zu ihrer Herstellung keine speziellen Formwerkzeuge erforderlich sind. Hierdurch können zum einen die Gestehungskosten gesenkt werden, und es kann zum anderen die Zahl der möglichen Zulieferer erhöht werden, was die Beschaffungszeiten senkt und die Beschaffungssicherheit erhöht.

Um ein ausreichend hohes Flächenträgheitsmoment gegenüber Belastungen in Höhenrichtung sicherstellen zu können, ist es vorteilhaft, wenn sich der Profilquerschnitt des offenen Profils über wenigstens 40%, vorzugsweise über wenigstens 50%, seiner Gesamtlänge in im Wesentlichen vertikaler Richtung erstreckt. Insgesamt kann somit ein in sich stabiler und nach Art der selbsttragenden Karosserie von Kraftfahrzeugen verwindungssteifer Aufbau des Maschinenrahmens erhalten werden.

In Weiterbildung der Erfindung wird vorgeschlagen, dass der Querschnitt des Profils an einer zum Innenraum der Maschine weisenden Seite einen sich im Wesentlichen horizontal erstreckenden Auflagesteg aufweist. Diese Ausgestaltung ist insbesondere bei Längsträgern von Vorteil. Auf diesen Auflagesteg des Profils können nämlich die Querträger, an denen die Funktionsbaugruppen montiert sind, aufgelegt werden. Somit können die Gewichtskräfte der Funktionsbaugruppen formschlüssig in die Längsträger eingeleitet werden. Grundsätzlich ist es jedoch auch denkbar, die Querträger zusätzlich oder alternativ kraftschlüssig mit den Längsträgern zu verbinden.

Um Gewichtskräfte besonders effektiv in den Träger einleiten zu können, ist es vorteilhaft, wenn sich an das innere Ende des Auflagestegs ein sich im Wesentlichen vertikal erstreckender Steg (nachstehend auch "innerer Vertikalsteg" genannt) anschließt und/oder dass sich an das äußere Ende des Auflagestegs ein sich im Wesentlichen vertikal erstreckender Steg (nachstehend auch "äußerer Vertikalsteg" genannt) anschließt.

Ferner ist es vorteilhaft, wenn das Profil an seinem oberen Ende einen schräg nach unten und außen verlaufender Steg aufweist. Zum einen kann dieser Steg ein Flächenträgheitsmoment bereitstellen, welches in der Lage ist, in horizontaler Richtung wirkende Belastungen aufzunehmen, wie sie beispielsweise auftreten, wenn Portalköpfe oder dergleichen beim bzw. für das Verfahren in horizontaler Richtung beschleunigt und/oder abgebremst werden. Zum anderen kann dieser schräg nach unten und außen verlaufende Steg eine Überdachung bilden, unter der beispielsweise elektrische und/oder elektronische und/oder fluidische, beispielsweise pneumatische und/oder hydraulische, Komponenten angeordnet werden können, um sie vor Staub und/oder Schmutz schützen zu können. Aufgrund des schrägen Verlaufs kann Staub und Schmutz durch die im Betrieb der Maschine auftretenden Vibrationen "abgeschüttelt" werden, bevor er sich auf diesem Steg ablagern konnte. Dies ist insbesondere bei Hygiene-sensitiven Anwendungsfällen, beispielsweise dem Verpacken von Lebensmitteln, von Vorteil. Ferner kann dieses schräge "Dach" unter ihm angeordnete Komponenten vor Beschädigung bei Montage und/oder Reparaturen und/oder durch herabfallende Gegenstände und dergleichen schützen.

An dieser Stelle sei angemerkt, dass mit Unterdruck arbeitende Komponenten im Zusammenhang mit der vorliegenden Erfindung als fluidische Komponenten bezeichnet werden.

Weiterhin kann das Profil an seinem unteren Ende einen sich im Wesentlichen vertikal erstreckenden Steg (nachstehend auch "unterer Vertikalsteg" genannt) aufweisen. Auch dieser untere Vertikalsteg kann zum einen zur Erhöhung des Flächenträgheitsmoments des Profils in Höhenrichtung beitragen. Zum anderen kann er zur Anbringung einerseits der vorstehend erwähnten elektrische und/oder elektronische Komponenten und andererseits von Halterungen für das Verlegen von Zufuhrleitungen für die verschiedenen an der Verpackungsmaschine benötigten Betriebsmedien, beispielsweise Strom, Druckluft, Unterdruck, Leimgranulat und dergleichen, verwendet werden.

Um eine in Breitenrichtung des Profils kompakte Gestaltung erzielen zu können, können der äußere Vertikalsteg und der untere Vertikalsteg in vertikaler Richtung im Wesentlichen zueinander fluchtend angeordnet sein. Auf diese Weise können beispielsweise die Zufuhrleitungen für die Betriebsmedien der Maschine unterhalb des Auflagestegs angeordnet werden.

Ferner können der innere Vertikalsteg und der untere Vertikalsteg durch einen schräg nach unten und außen verlaufender Steg verbunden sein. Durch den schrägen Verlauf dieses Stegs kann ein weiterer im Wesentlichen horizontal verlaufender Steg, auf dem sich Staub und Schmutz ablagern könnte, vermieden werden. Ferner kann dieser schräg verlaufende Steg einen Beitrag zu dem Flächenträgheitsmoment leisten, welches in der Lage ist, in horizontaler Richtung wirkende Belastungen aufzunehmen.

Darüber hinaus kann der Auflagesteg und/oder der äußere Vertikalsteg und/oder der untere Vertikalsteg eine Mehrzahl von Montagelöchern aufweisen, vorzugsweise ein sich über die gesamte Länge des Trägers erstreckendes Lochraster. Aufgrund der Ausbildung der Träger als offenes Profil stellt die Ansammlung von Staub und Schmutz im Vergleich zum Stand der Technik in der Praxis kein Problem mehr dar. Daher können ohne Weiteres vorgefertigte Montagelöcher vorgesehen werden. Ist die Mehrzahl von Montagelöchern als Lochraster ausgebildet, d.h. als eine Mehrzahl von Montagelöchern, die in einem vorgegebenen festen Abstand voneinander vorgesehen sind, so brauchen bei einer Modifizierung der Maschine nicht erst neue Montagelöcher in das Profil eingebracht und zuvor konstruiert zu werden, was den mit der Modifizierung verbundenen Arbeitsaufwand deutlich reduziert.

Vorteilhafterweise können die Montagelöcher als sich in Längsrichtung des Trägers erstreckende Langlöcher ausgebildet sein. Dies ermöglicht eine besonders flexible Feinjustierung der Anordnung der Funktionsbaugruppen. Wenn die Langlöcher eine (bezogen auf ihre Erstreckung) Länge von wenigstens 20 mm bzw. (bezogen auf die übliche Gebrauchsorientierung des Profilelements) Höhe von wenigstens 10 mm aufweist, so können etwaig auf ihrer Randfläche liegengebliebene Schmutzpartikel mit üblichem Reinigungsgerät leicht entfernt werden.

Wie bereits erwähnt kann der Maschinenrahmen wenigstens einen Ständer umfassen, mittels welchem der Maschinenrahmen auf dem Boden einer Maschinenhalle oder einem vergleichbaren Untergrund aufsteht. Hinsichtlich der für die Herstellung des wenigstens einen Ständers geeigneten Materialien gilt das vorstehend für die Materialien des Profilelements Gesagte in identischer Weise. Beispielsweise kann wenigstens einer der Ständer, vorzugsweise alle Ständer, des Maschinenrahmens von einem Metallwinkelblech gebildet sein.

Wenn wenigstens ein Verbindungselement, welches zur Verbindung eines Trägers mit einem Ständer oder einem anderen Träger dient, vorzugsweise alle diese Verbindungselemente, aus elektrisch leitfähigem Material gefertigt ist bzw. sind, so kann hierdurch eine elektrisch leitfähige Verbindung der verschiedenen Komponenten des Maschinenrahmens erzielt werden. Dies ermöglicht es im Idealfall beispielsweise, den Maschinenrahmen als Ganzes zu erden, d.h. mit einem einzigen Erdungskabel. Der gesamte Maschinenrahmen wird quasi zu einem einzigen Masse- bzw. Erdungspunkt.

Das wenigstens eine Verbindungselement kann beispielsweise aus Bronze und/oder Messing und/oder Kupfer und/oder Stahl, beispielsweise Edelstahl, und/oder Aluminium, beispielsweise oberflächenpassiviertem Aluminium gefertigt sein.

Ferner kann das wenigstens eine Verbindungselement mit dem Träger und dem Ständer bzw. den Trägern durch Verschrauben verbunden sein.

Um für das Wartungspersonal den Zugang zu der Maschine erleichtern und damit die Gefahr einer Verletzung bei der Wartung verringern zu können, kann ferner vorgesehen sein, dass ein unterer im Wesentlichen horizontal verlaufender Längsträger des Maschinenrahmens um eine vorbestimmte Distanz zur Längsmitte des Maschinenrahmens versetzt angeordnet ist. Auf diese Weise muss das Wartungspersonal diesen Längsträger im Zuge der Wartung nicht überschreiten, um auf Komponenten im Inneren der Maschine zugreifen zu können.

Nach einem weiteren Gesichtspunkt betrifft die vorliegende Erfindung eine Befestigungsanordnung, die einen Maschinenrahmen nach dem ersten Gesichtspunkt der Erfindung und wenigstens ein Befestigungselement zur Befestigung einer Funktionsbaugruppe an einem Profilelement durch Eingriff in wenigstens ein Montageloch umfasst, wobei das Befestigungselement wenigstens ein Hakenteil mit einem Durchgriffsabschnitt und einem Hakenabschnitt umfasst, wobei der Durchgriffsabschnitt dazu bestimmt ist, das Montageloch zu durchsetzen, und eine Höhe aufweist, die kleiner ist als die Höhe des Montagelochs, wobei der Hakenabschnitt dazu bestimmt ist, das Montageloch zu hintergreifen und eine vorbestimmte Höhe aufweist, wobei die Summe der Höhe des Durchgriffsabschnitts und der Höhe des Hakenabschnitts größer ist als die Höhe des Montagelochs, wobei der wenigstens eine Hakenteil ferner einen Anlageabschnitt aufweist, der dazu bestimmt ist, mit einer ersten Anlagefläche des Profilelements in Anlageeingriff zu treten, wobei das Befestigungselement wenigstens ein Klemmteil umfasst, das mit dem wenigstens einen Hakenteil zusammenwirkt und relativ zu diesem zwischen einer Klemmstellung und einer Lösestellung verstellbar ist, und wobei das wenigstens eine Klemmteil dazu bestimmt ist, in der Klemmstellung mit einer zweiten Anlagefläche des Profilelements derart in Anlageeingriff zu treten, dass der Anlageabschnitt des wenigstens einen Hakenteils mit der ersten Anlagefläche des Profilelements in Anlageeingriff tritt und somit den Eingriff des Durchgriffsabschnitts in das Montageloch und das Hintergreifen des Montagelochs durch den Hakenabschnitt sichert.

Die erfindungsgemäße Befestigungsanordnung, genauer gesagt das Zusammenwirken des erfindungsgemäßen Maschinenrahmens mit dem wenigstens einen Befestigungselement, erleichtert das Anbringen und die Positionierung von Funktionsbaugruppen. Eine Positionsveränderung des Befestigungselements, insbesondere ein unbeabsichtigtes Lösen aus dem Montageloch, wird durch das Klemmteil verhindert.

Zur Befestigung wird ein Befestigungselement, dessen Klemmteil sich in Lösestellung befindet, in das Montageloch eingeführt, bis das wenigstens eine Hakenteil das Montageloch hintergreift. Der Durchgriffsabschnitt liegt dabei an einem Auflagepunkt auf der Seite des Klemmteils an der in Höhenrichtung hakenabschnittseitigen Kante des Montagelochs auf. Indem das Klemmteil zunehmend in die Klemmstellung verstellt wird, wird das Befestigungselement dann um den Auflagepunkt gedreht, bis der Anlageabschnitt des Hakenteils mit der ersten Anlagenfläche des Profilelements in Eingriff tritt. In dieser der Klemmstellung des Klemmteils entsprechenden Stellung erstreckt sich der Durchgriffsabschnitt vollständig innerhalb des Montagelochs und kann in Höhenrichtung an der Begrenzungsfläche des Montagelochs anliegen. Es kann allerdings an seiner Oberseite aber auch einen vorbestimmten, vorzugsweise geringen, Abstand zu einem oberen Abschnitt der Begrenzungsfläche des Montagelochs aufweisen.

Damit das Befestigungselement während der Drehung um den Auflagepunkt nicht mit dem Profilelement kollidiert, wird in Weiterbildung des zweiten Gesichtspunkts der Erfindung vorgeschlagen, dass das Hakenteil vollständig innerhalb eines fiktiven Kreises angeordnet ist, dessen Mittelpunkt der Auflagepunkt bildet, und dessen Radius gleich der Höhe des Montagelochs ist. Somit kann zuverlässig vermieden werden, dass die Außenkontur des Hakenteils bei der Drehbewegung mit dem oberen Abschnitt der Begrenzungsfläche des Montagelochs kollidiert.

Zum Lösen des Befestigungselements von dem Profilelement wird das Klemmteil von der Klemmstellung zurück in die Lösestellung übergeführt. Anschließend kann das Befestigungselement durch Drehung um den Auflagepunkt aus dem Montageloch entfernt werden.

An dieser Stelle sei angemerkt, dass sich bei einem Befestigungselement, das in Klemmstellung ein Montageloch durchsetzt, die Höhe des Durchgriffsabschnitts und die Höhe des Hakenabschnitts in dieselbe Richtung erstrecken wie die Höhe des Montagelochs. Auch die Längsrichtung des Befestigungselements entspricht der Längsrichtung des Montagelochs, wenn das Befestigungselement in Klemmstellung das Montageloch durchsetzt. Orthogonal zu der Höhenrichtung und der Längsrichtung erstreckt sich die Durchgriffsrichtung. Mit anderen Worten erstreckt sich die Durchgriffsrichtung eines Befestigungselements in Klemmstellung durch das Montageloch.

Vorzugsweise sind die erste Anlagefläche des Profilelements und die zweite Anlagefläche des Profilelements an voneinander wegweisenden Oberflächen des Profilelements angeordnet.

Für eine verbesserte Positionierung des Befestigungselements und für eine Sicherung des Befestigungselements in alle drei Richtungen, kann an einem Basisteil des Befestigungselements eine Anlagefläche vorgesehen sein, die mit einer dritten Anlagefläche des Profilelements in Anlageeingriff tritt, wobei vorzugsweise die dritte Anlagefläche des Profilelements auf der gleichen Seite des Profilelements angeordnet sein kann wie die zweite Auflagefläche, und wobei weiter bevorzugt die dritte Anlagefläche des Profilelements und die erste Anlagefläche auf voneinander wegweisenden Oberflächen des Montagelochs angeordnet sein können.

Vorzugsweise ist der Durchgriffsabschnitt in Durchgriffsrichtung zwischen dem Hakenabschnitt und dem Vorsprungsabschnitt angeordnet.

Da insbesondere das wenigstens eine Hakenteil hohen Belastungen ausgesetzt sein kann, hat es sich als vorteilhaft erwiesen, wenn das Befestigungselement eine Mehrzahl von Hakenteilen umfasst. So kann die Last verteilt werden und ein Abbrechen eines Hakenteils kompensiert werden.

Darüber hinaus kann das Befestigungselement eine Mehrzahl von Klemmteilen umfassen. Hierdurch wird das Befestigungselement an mehreren Auflageflächen mit dem Profilelement verspannt, so dass die Gefahr eines Verrutschens des Befestigungselements weiter verringert wird.

Der Montageaufwand eines Befestigungselements an einem Maschinenrahmen kann weiter dadurch reduziert werden, dass wenigstens ein Klemmteil von einer Schraube gebildet ist. Vorteilhafterweise sind alle Klemmteile von Schrauben gebildet. Nachdem der Durchgriffsabschnitt das Montageloch durchsetzt hat, kann die Schraube eingeschraubt werden, bis sie mit der zweiten Anlagefläche des Profilelements in Anlageeingriff tritt. Nachdem die Schraube die zweite Anlagefläche berührt, kann sie noch weiter eingedreht werden, so dass das entstehende Moment das Befestigungselement mit dem Profilelement verspannt. Um ein Überdrehen der Schraube und eine Beschädigung des Profilelements zu vermeiden, kann die Schraube mit einem Nenndrehmoment festgezogen werden. Durch Lockern der Schraube kann diese in einfacher Weise wieder zurück in die Lösestellung gebracht werden.

Die Schraube kann also in einfacher Weise von der Vorderseite eingeführt bzw. eingeschraubt werden. Zudem ist keine Kontermutter oder das Einbringen eines Gewindes in das Profilelement erforderlich, was die Konstruktion des Maschinenrahmens im Vergleich zu herkömmlichen Maschinenrahmen sowohl in der Herstellung als auch im Gebrauch erheblich vereinfacht.

Hinsichtlich der für die Herstellung des Befestigungselements geeigneten Materialien gilt das voranstehend für die Materialien des Profilelements diskutierte in identischer Weise. Zur Vereinfachung der Herstellung und Reduzierung der Herstellkosten kann das Befestigungselement beispielsweise als Biegeelement hergestellt werden. Vorzugsweise kann das Befestigungselement als gelasertes Edelstahl-Biegeelement oder als Stanz-Biegeelement hergestellt sein.

Die Erfindung wird im Folgenden anhand von Ausführungsbeispielen mit Bezug auf die begleitenden Zeichnungen näher erläutert werden.

Es stellt dar:
- Figur 1: eine perspektivische Darstellung eines erfindungsgemäßen Maschinenrahmens,
- Figur 2: eine Querschnittansicht eines erfindungsgemäßen Blechprofils,
- Figur 3: eine Detailansicht des Maschinenrahmens mit einem Querträger, der eine Funktionsbaugruppe trägt,
- Figuren 4a und 4b: Detailansichten zur Erläuterung der Verbindung eines Ständers des Maschinenrahmens und mit dessen Längs- und Querträgern;
- Figuren 5a und 5b: schematische Darstellungen verschiedener Ausführungsformen von Verbindungselementen,
- Figur 6: eine Detailansicht einer Verbindungsstelle eines Querträgers mit einem Längsträger des Maschinenrahmens,
- Figuren 7a und 7b: schematische Darstellungen zur Erläuterung des Zusammenwirkens eines Befestigungselement mit einem Montageloch eines Profilelements des Maschinenrahmens, und
- Figuren 8a und 8b: schematische Darstellungen weiterer Ausführungsvarianten von Befestigungselementen.

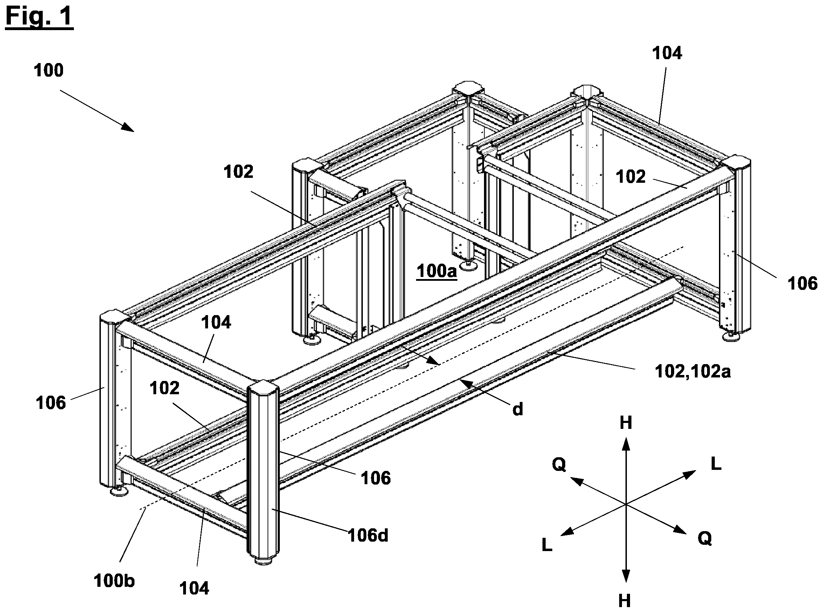

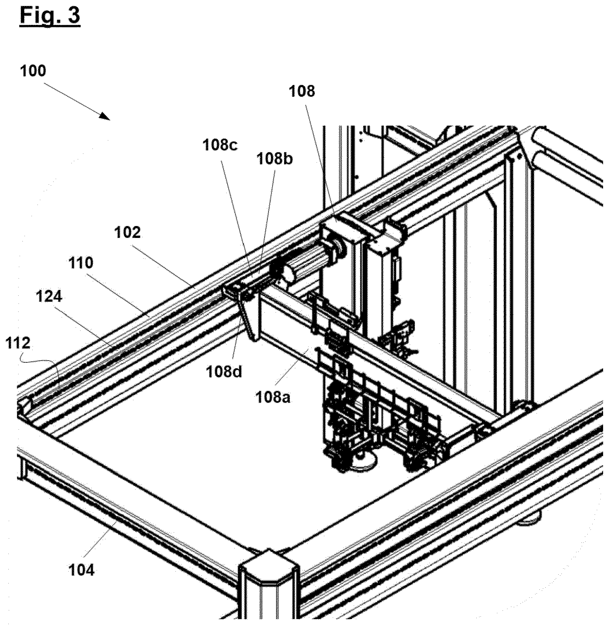

In Figur 1 ist ein Maschinenrahmen ganz allgemein mit 100 bezeichnet. Der Maschinenrahmen 100 umfasst eine Mehrzahl von Trägern, nämlich eine Mehrzahl von Längsträgern 102 und eine Mehrzahl von Querträgern 104. Ferner umfasst der Maschinenrahmen 100 eine Mehrzahl von Ständern 106. Durch die Verbindung der Ständer 106 mit den Längsträgern 102, mit den Querträgern 104 sowie mit weiteren Querträgern von Funktionsbaugruppen 108 (siehe Figur 3) entsteht ein insgesamt torsionssteifer Maschinenrahmen 100.

Der Vollständigkeit halber sei angemerkt, dass die Längsträger 102 in Längsrichtung L des Maschinenrahmens 100 verlaufen, die Querträger 104 in Querrichtung Q des Maschinenrahmens 100 verlaufen, und die Ständer 104 in Höhenrichtung H des Maschinenrahmens 100 verlaufen.

Die Längsträger 102, die Querträger 104 und die Ständer 106 definieren einen Innenraum 100a des Maschinenrahmens 100, in dem die Funktionsbaugruppen einer (nicht dargestellten) Maschine, beispielsweise einer Verpackungsmaschine, angeordnet sein können. Die Arbeitsfortschrittsrichtung der Maschine verläuft üblicherweise parallel zur Längsrichtung L des Maschinenrahmens 100.

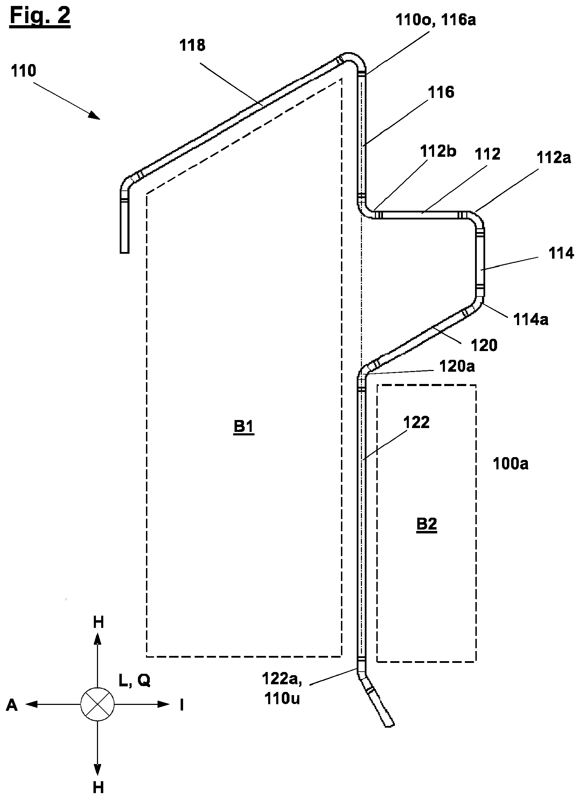

In dem dargestellten Ausführungsbeispiel sind die Längsträger 102 und die Querträger 104 alle von einem Profilelement 110 gebildet, das ein offenes Profil aufweist (siehe Figur 2).

Grundsätzlich kann das Profilelement 110 zwar aus jedem geeigneten Material hergestellt sein. Gemäß dem vorliegenden Ausführungsbeispiel sind jedoch alle Träger 102, 104 aus Metallblech gefertigt, beispielsweise Stahlblech, vorzugsweise Edelstahlblech 1.4301, und als Biegeprofil hergestellt.

Eine Querschnittsansicht des Profilelements 110 entlang der Längsrichtung L bzw. der Querrichtung Q ist in Figur 2 dargestellt. Die zum Innenraum 100a des Maschinenrahmens 100 hin weisende Richtung "nach innen" ist in Figur 2 mit I bezeichnet und die vom Innenraum 100a weg weisende Richtung "nach außen" mit A.

Den einzigen im Wesentlichen horizontal verlaufenden Abschnitt des Profilelements 110 bildet ein Auflagesteg 112. Wie in Figur 3 dargestellt ist, kann auf dem Auflagesteg 112 eines Längsträgers 102 der Querträger 108a einer Funktionsbaugruppe 108 der in dem Maschinenrahmen 100 montierten Maschine aufliegen. Der Auflagesteg 112 dient somit zur Einleitung der Gewichtskräfte der Funktionsbaugruppe 108 in den Maschinenrahmen 100.

An dem inneren Ende 112a des Auflagestegs 112 schließt sich ein sich im Wesentlichen vertikal erstreckender Steg 114 (innerer Vertikalsteg 114) an den Auflagesteg 112 an. Und an dem äußeren Ende 112b des Auflagestegs 112 schließt sich ein sich im Wesentlichen vertikal erstreckender Steg 116 (äußerer Vertikalsteg 116) an den Auflagesteg 112 an.

In dem dargestellten Ausführungsbeispiel bildet ein oberes Ende 116a des äußeren Vertikalstegs 116 ein oberes Ende 110o des Profilelements 110. An das obere Ende 116a des äußeren Vertikalstegs 116 schließt sich ein schräg nach unten und außen verlaufender Steg 118 an. Unterhalb dieses schräg nach unten außen verlaufenden Stegs 118 können in dem gestrichelt angedeuteten Bereich B1 elektrische und/oder elektronische und/oder fluidische, beispielsweise pneumatische und/oder hydraulische, Komponenten angeordnet werden. Diese Komponenten werden durch den schräg nach unten und außen verlaufende Steg 118 vor Staub und/oder Schmutz geschützt.

An das untere Ende 114a des inneren Vertikalstegs 114 schließt sich ein weiterer schräg nach unten und außen verlaufender Steg 120 an. In einem gestrichelt angedeuteten Bereich B2 unterhalb dieses Stegs 120 können beispielsweise elektrische und/oder fluidische Versorgungsleitungen und/oder Datenleitungen angeordnet sein, die zur Versorgung und/oder Steuerung der in dem Bereich B1 angeordneten Komponenten dienen.

Den Abschluss bildet ein weiterer vertikaler Steg 122 (unterer Vertikalsteg 122), der sich an das untere Ende 120a des schräg verlaufenden Stegs 120 anschließt. An dem unteren Vertikalsteg 122 können unter anderem die vorstehend genannten Komponenten und Leitungen angebracht werden. Das untere Ende 122a des unteren Vertikalstegs 122 bildet das untere Ende 110u des Profilelements 100.

Nachzutragen ist noch, dass der äußere Vertikalsteg 116 und der untere Vertikalsteg 122 in Höhenrichtung H im Wesentlichen zueinander fluchtend angeordnet sind, wie in Figur 2 durch eine strich-punktierte Linie angedeutet ist.

Nachzutragen ist ferner, dass der innere Vertikalsteg 114, der äußere Vertikalsteg 116 und der untere Vertikalsteg 122 sich zusammen über wenigstens 40% der Gesamtlänge des Profilelements 110 erstrecken. Dies sorgt für eine ausreichende Vertikalsteifigkeit des Profilelements 110 gegenüber in Höhenrichtung H auf es einwirkende Belastungen. Die Quersteifigkeit wird durch die beiden schräg verlaufenden Stege 118 und 120 bereitgestellt, sowie die zusätzliche Versteifung durch die an den Längsträgern 102 befestigten Querträger der Funktionsbaugruppen 108.

Figur 3 zeigt einen Ausschnitt eines Maschinenrahmens 100 mit einer Funktionsbaugruppe 108. Auf den genauen Aufbau und die genaue Funktion der Funktionsbaugruppe kommt es dabei im Zusammenhang mit der vorliegenden Erfindung nicht an. Vielmehr geht es in Figur 3 darum, wie die Funktionsbaugruppe 108 an den Längsträgern 102 des Maschinenrahmens befestigt ist.

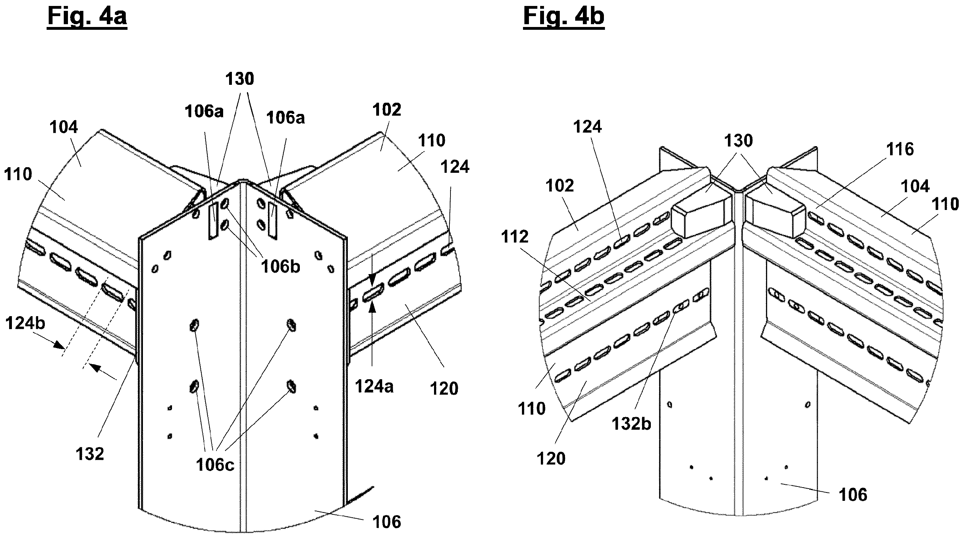

Wie insbesondere in Figur 4b dargestellt ist, sind im Auflagesteg 112, im äußeren Vertikalsteg 116 und im unteren Vertikalsteg 120 jeweils eine Mehrzahl von Montagelöchern 124 vorgesehen. Diese Montagelöcher 124 sind als Lochraster ausgebildet, das sich über die gesamte Länge des Längsträgers 102 bzw. des Querträgers 104 erstreckt. Ferner ist die Mehrzahl von Montagelöchern 124 als sich in Längserstreckungsrichtung des jeweiligen Trägers 102 bzw. 104 erstreckende Langlöcher ausgebildet. Die Langlöcher weisen eine sich in Höhenrichtung H erstreckende Höhe 124a und eine sich entlang der jeweiligen Längserstreckungsrichtung erstreckende Länge 124b auf. Vorzugsweise weist die Mehrzahl von Langlöchern 124 eine Höhe 124a von jeweils wenigstens 10 mm und eine Länge 124b von jeweils wenigstens 20 mm auf.

Gemäß Figur 3 verfügt der Querträger 108a der Funktionsbaugruppe 108 über eine Endeinheit 108b mit einer sich im Wesentlichen horizontal erstreckenden Schulter 108c. Mit dieser Schulter 108c liegt die Endeinheit 108b und mit ihr die gesamte Funktionsbaugruppe 108 auf dem Auflagesteg 112 des Längsträgers 102 auf. Gegebenenfalls können an der Unterseite der Schulter 108c (nicht dargestellte) Stifte vorgesehen sein, mit denen sie formschlüssig in Montagelöcher 124 des Auflagestegs 112 eingreift. Ferner erkennt man in Figur 3 Befestigungsbolzen 108d, die Montagelöcher 124 des äußeren Vertikalstegs 116 durchsetzen, so dass die Schulter 108b und mit ihr die gesamte Funktionseinheit 108 mit dem Längsträger 102 verschraubt werden kann.

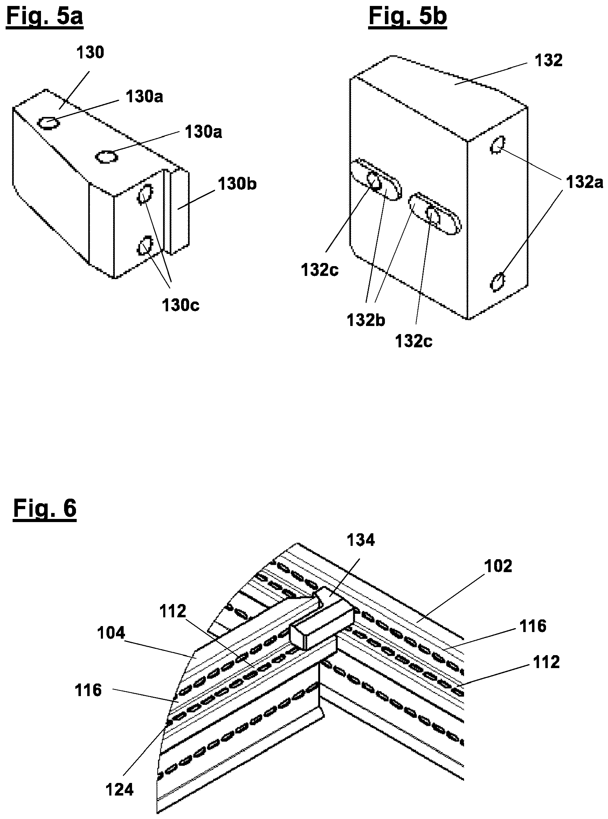

Mit Bezug auf die Figuren 4a und 4b sowie 5a und 5b sind die Längsträger 102 und die Querträger 104 mittels Verbindungselementen 130 und 132 mit den Ständern 106 verbunden. Vorzugsweise sind alle Verbindungselemente 130, 132 aus einem elektrisch leitfähigen Material gefertigt.

Das in Figur 5a im Detail dargestellte Verbindungselement 130 ist dazu bestimmt, auf der Innenseite des Profilelements 110 angeordnet zu werden. Insbesondere wird das Verbindungselement 130 auf den Auflagesteg 112 des Profilelements 110 aufgelegt und kann an diesem über (nicht dargestellte) Befestigungsbolzen befestigt werden, welche entsprechende Durchgangslöcher 130a (siehe Figur 5a) und Montagelöcher 124 des Auflagestegs 112 durchsetzen. Darüber hinaus weist das Verbindungselement 130 einen Vorsprung 130b auf, welcher in eine korrespondierende Öffnung 106a des Ständers 106 (siehe Figur 4a) eingreift. Ferner weist der Ständer 106 neben jeder der Öffnungen 106a zwei Bohrungen 106b auf und weisen die Verbindungselemente 130 zwei korrespondierende Gewindebohrungen 130c auf, die zur Befestigung der Verbindungselemente 130 am Ständer 106 mittels (nicht dargestellter) Gewindebolzen dienen.

Das in Figur 5b im Detail dargestellte Verbindungselement 132 ist dazu bestimmt, auf der Außenseite des Profilelements 110 angeordnet zu werden. Insbesondere weist das Verbindungselement 132 zwei Gewindebohrungen 132a auf, die zur Befestigung der Verbindungselemente 132 am Ständer 106 mittels (nicht dargestellter) Gewindebolzen dienen, welche korrespondierende Bohrungen 106c des Ständers 106 durchsetzen. Darüber hinaus weist das Verbindungselement 132 zwei Vorsprünge 132b auf, die derart gestaltet sind, dass sie formschlüssig in zugeordnete Montagelöcher 124 des unteren Vertikalstegs 120 eingesetzt werden können, ohne auf der anderen Seite aus den Montagelöchern 124 herauszuragen. Ferner sind in den Vorsprüngen 132b Gewindebohrungen 132c ausgebildet, welche zur Befestigung des Verbindungselements 132 an dem unteren Vertikalsteg 120 mittels (nicht dargestellter) Gewindebolzen dienen.

Wie in Figur 6 dargestellt ist, können die Längsträger 102 und die Querträger 104 über ein im Wesentlichen L-förmiges Verbindungselement 134 auch unmittelbar miteinander verbunden werden. Von der Anordnung her ähnelt das Verbindungselement 134 dem Verbindungselement 130, da es wie dieses auf die Auflagestege 112 sowohl des Längsträgers 102 als auch des Querträgers 104 aufgelegt werden und an diesen über (nicht dargestellte) Befestigungsbolzen befestigt werden kann.

Zur Figur 1 ist noch nachzutragen, dass die Ständer 106 an ihrer von außen sichtbaren Seite mit einer Verkleidung 106d versehen sein können. Diese Verkleidung kann zum einen zum Schutz vor Umwelteinflüssen oder zur Vermeidung von Beschädigungen oder Verletzungen dienen, sie kann zum anderen durch eine spezielle Form- und Farbgebung aber auch zu Designzwecken genutzt werden.

Ferner ist zur Figur 1 nachzutragen, dass einer der unteren Längsträger 102 des Maschinenrahmen 100 (in Figur 1 mit 102a bezeichnet) um eine vorbestimmte Distanz d zur Längsmitte 100b des Maschinenrahmens 100 hin versetzt angeordnet sein kann. Dies erleichtert dem Wartungs- und/oder Bedienungspersonal den Zugriff auf die Funktionseinheiten 108, da der Längsträger hierzu nicht überschritten zu werden braucht.

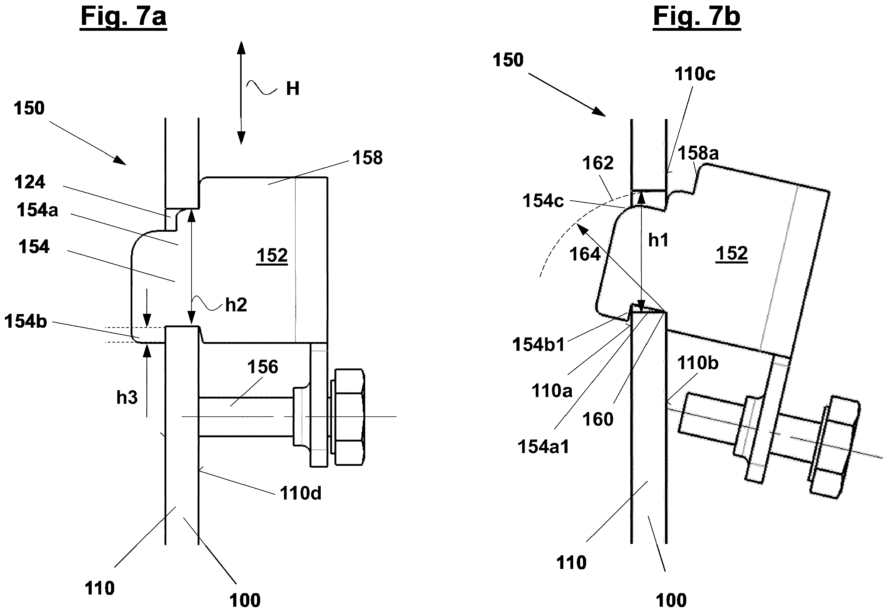

Gemäß einem zweiten Gesichtspunkt betrifft die Erfindung eine Befestigungsanordnung 150, wie sie exemplarisch in den Figuren 7a und 7b dargestellt ist. Die Befestigungsanordnung 150 umfasst den Maschinenrahmen 100 und wenigstens ein Befestigungselement 152, an dem weitere Elemente, beispielsweise Funktionsbaugruppen 108, befestigt werden können.

Das Befestigungselement 152 ist in Anpassung an die Montagelöcher 124 der Profilelemente 110 des Maschinenrahmens 100 ausgebildet. Insbesondere umfasst das Befestigungselement 152 ein Hakenteil 154 mit einem Durchgriffsabschnitt 154a und einem Hakenabschnitt 154b.

Der Durchgriffsabschnitt 154a ist dazu bestimmt, das Montageloch 124 zu durchsetzen, wie in Figur 7a dargestellt ist. Ferner weist der Durchgriffsabschnitt 154a eine Höhe h2 auf, die kleiner, vorzugsweise nur geringfügig kleiner, beispielsweise weniger als 1 mm kleiner, ist als die Höhe h1 des Montagelochs 124. Grundsätzlich ist es auch denkbar, dass die Höhen h1 und h2 unter Berücksichtigung der Toleranzen im Wesentlichen gleich groß sind, so dass der Durchgriff als Übergangspassung ausgebildet ist. Bereits nach dem Eindrehen des Befestigungselements 152 kann somit eine leichte Klemmung zwischen Befestigungselement 152 und dem Profilelement 110 erzielt werden.

Der Hakenabschnitt 154b ist dazu bestimmt, das Montageloch 124 formschlüssig zu hintergreifen. In Höhenrichtung H weist der Hakenabschnitt 154b eine vorbestimmte Höhe h3 auf. Die Summe der Höhe h2 des Durchgriffsabschnitts 154a und der vorbestimmten Höhe h3 des Hakenabschnitts 154b ist größer als die Höhe h1 des Montagelochs 124. Dies hat zur Folge, dass das Befestigungselement 152, dann, wenn es sich in der in Figur 7a dargestellten montierten Stellung befindet, nicht (in Figur 7a nach rechts) aus dem Montageloch 124 herausgezogen werden kann, da eine Anlagefläche 154b1 des Hakenabschnitts 154b (siehe Figur 7b) auch dann noch mit einer ersten Anlagefläche 110a des Profilelements 110 zusammenwirkt, wenn der Durchgriffsabschnitt 154a in dem Montageloch 124 ganz nach oben verschoben worden sein sollte.

Ferner umfasst das Befestigungselement 152 wenigstens ein Klemmteil 156, das mit dem wenigstens einen Hakenteil 154 zusammenwirkt und relativ zu dem Hakenteil 154 zwischen einer Klemmstellung (siehe Figur 7a) und einer Lösestellung (siehe Figur 7b) verstellbar ist. Das Klemmteil 156 ist dazu bestimmt, in der Klemmstellung mit einer zweiten Anlagefläche 110b des Profilelements 110 in Anlageeingriff zu treten, so dass die Anlagefläche 154b1 des Hakenabschnitts 154b mit der Anlagefläche 110a des Profilelements 110 in Anlageeingriff tritt. Hierdurch wird der Eingriff des Durchgriffsabschnitts 154a in das Montageloch 124 und das Hintergreifen des Montagelochs 124 durch den Hakenabschnitt 154b gesichert.

Die Positionsstabilität des Befestigungselements 152 in der in Figur 7a gezeigten Klemmstellung kann dadurch weiter erhöht werden, dass an einem Basisteil 158 des Befestigungselements 152 eine Anlagefläche 158a vorgesehen ist, welche mit einer dritten Anlagefläche 110c des Profilelements 110 in Anlageeingriff treten kann. Wie aus den Figuren 7a und 7b ersichtlich, sind die zweite Anlagefläche 110b und die dritten Anlagefläche 110c auf der gleichen Seite 110d des Profilelements 110 angeordnet. Ferner sind die erste Anlagefläche 110a und die dritten Anlagefläche 110c in Höhenrichtung H auf voneinander verschiedenen Seiten des Montagelochs 124 angeordnet.

Vor dem Anbringen des Befestigungselements 152 befindet sich das Klemmteil 156 in seiner Lösestellung (Figur 7b). Das Befestigungselement 152 wird mit dem Hakenabschnitt 154b voraus durch das Montageloch 124 geführt, bis der Durchgriffsabschnitt 154a mit seiner hakenabschnittseitigen Fläche 154a1 an einem Auflagepunkt 160 an dem Montageloch 124 anliegt. Der Auflagepunkt 160 ist in Höhenrichtung H auf derselben Seite wie die erste Anlagefläche 110a angeordnet. Zudem befindet sich der Auflagepunkt 160 auf der Seite 110d des Profilelements 110.

Um das Befestigungselement 152 in seine montierte Stellung überzuführen, wird das Befestigungselement 152 um den Auflagepunkt 160 gedreht, bis die Anlagefläche 154b1 des Hakenabschnitts 154b an der ersten Anlagefläche 110a des Profilelements 110 anliegt.

Um diese Drehbewegung zu ermöglichen, weist das Hakenteil 154 eine Außenkontur 154c auf, die innerhalb einer fiktiven Kreislinie 162 (in Figur 7b gestrichelt dargestellt) liegt. Die Kreislinie 162 weist einen Radius 164 auf, der gleich der Höhe h1 des Montagelochs 124 ist. Mittelpunkt der Kreislinie 162 ist der Auflagepunkt 160.

Nach der Drehung des Befestigungselements 152 um den Auflagepunkt 160 liegen nicht nur die Anlageflächen 154b1 und 110a aneinander an, sondern auch die Anlageflächen 158a und 110c, wodurch das Befestigungselement 152 in zwei Richtungen gesichert ist.

Anschließend kann das Klemmteil 156 in die Klemmstellung überführt werden (Figur 7a). Hierbei liegt das Klemmteil 156 an der zweiten Anlagefläche 110b des Profilelements 110 an. Dadurch wird die Position des Hakenabschnitts 152 gesichert.

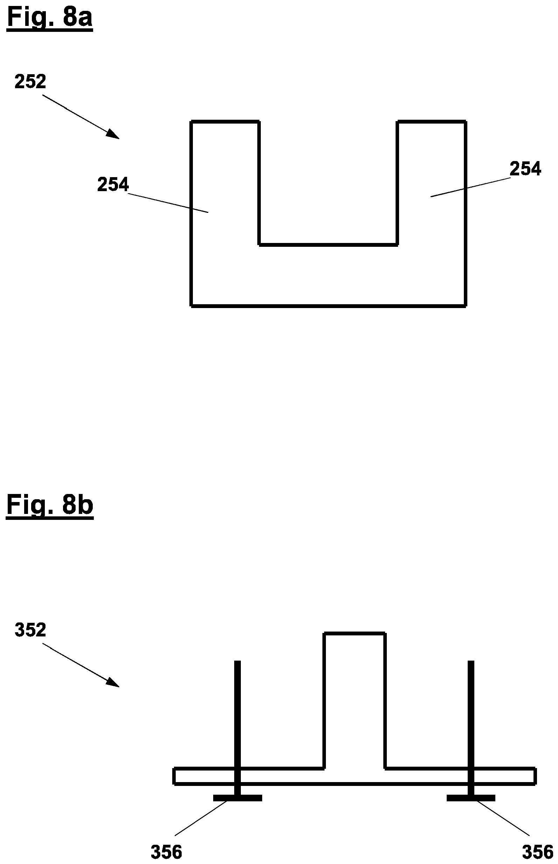

Figur 8a zeigt schematisch eine weitere Ausführungsform eines Befestigungselements 252 mit einer Mehrzahl von Hakenteilen 254.

Figur 8b zeigt schematisch eine weitere Ausführungsform eines Befestigungselements 352, welches eine Mehrzahl von Klemmteilen 356 umfasst.

## Patentansprüche

1. Maschinenrahmen (100), insbesondere für eine Verpackungsmaschine, umfassend eine Mehrzahl von Trägern (102, 104), nämlich wenigstens einen Längsträger (102) und wenigstens einen Querträger (104),
**dadurch gekennzeichnet, dass** wenigstens einer der Träger (102, 104) von einem Profilelement (110) mit einem offenen Profil gebildet ist.

2. Maschinenrahmen nach Anspruch 1,
**dadurch gekennzeichnet, dass** das Profilelement (110) aus Metallblech gefertigt ist.

3. Maschinenrahmen nach Anspruch 1 oder 2,
**dadurch gekennzeichnet, dass** das Profilelement (110) aus einem Biegeprofil hergestellt ist.

4. Maschinenrahmen nach einem der Ansprüche 1 bis 3,
**dadurch gekennzeichnet, dass** sich der Profilquerschnitt des offenen Profils über wenigstens 40%, vorzugsweise wenigstens 50%, seiner Gesamtlänge in im Wesentlichen vertikaler Richtung erstreckt.

5. Maschinenrahmen nach einem der Ansprüche 1 bis 4,
**dadurch gekennzeichnet, dass** der Querschnitt des Profils an einer zum Innenraum (100a) der Maschine weisenden Seite (I) einen sich im Wesentlichen horizontal erstreckenden Auflagesteg (112) aufweist,
wobei vorzugsweise sich an das innere Ende (112a) des Auflagestegs (112) ein sich im Wesentlichen vertikal erstreckender Steg (innerer Vertikalsteg) (114) anschließt oder/und sich an das äußere Ende (112b) des Auflagestegs (112) ein sich im Wesentlichen vertikal erstreckender Steg (äußerer Vertikalsteg) (116) anschließt.

6. Maschinenrahmen nach einem der Ansprüche 1 bis 5,
**dadurch gekennzeichnet, dass** das Profil an seinem oberen Ende (110o) einen schräg nach unten und außen verlaufender Steg (118) aufweist.

7. Maschinenrahmen nach einem der Ansprüche 1 bis 6,
**dadurch gekennzeichnet, dass** das Profil an seinem unteren Ende (110u) einen sich im Wesentlichen vertikal erstreckenden Steg (unterer Vertikalsteg) (122) aufweist.

8. Maschinenrahmen nach Anspruch 7,
**dadurch gekennzeichnet, dass** der äußere Vertikalsteg (116) und der untere Vertikalsteg (122) in vertikaler Richtung im Wesentlichen zueinander fluchtend angeordnet sind oder/und dass der innere Vertikalsteg (114) und der untere Vertikalsteg (122) durch einen schräg nach unten und außen verlaufender Steg (120) verbunden sind.

9. Maschinenrahmen nach Anspruch 7 oder 8,
**dadurch gekennzeichnet, dass** der Auflagesteg (112) oder/und der äußere Vertikalsteg (116) oder/und der untere Vertikalsteg (122) eine Mehrzahl von Montagelöchern (124) aufweist, vorzugsweise ein sich über die gesamte Länge des Trägers (102, 104) erstreckendes Lochraster.

10. Maschinenrahmen nach einem der Ansprüche 1 bis 9,
ferner umfassend wenigstens einen in Höhenrichtung (H) des Maschinenrahmens verlaufenden Ständer (106),
**dadurch gekennzeichnet, dass** wenigstens einer der Ständer (106), vorzugsweise alle Ständer (106), von einem Metallwinkelblech gebildet ist.

11. Maschinenrahmen nach einem der Ansprüche 1 bis 10,
**dadurch gekennzeichnet, dass** wenigstens ein Verbindungselement (130, 132), welches zur Verbindung eines Trägers (102, 104) mit einem Ständer (106) oder einem anderen Träger (102, 104) dient, vorzugsweise alle diese Verbindungselemente (130, 132), aus elektrisch leitfähigem Material gefertigt ist bzw. sind,
wobei vorzugsweise das wenigstens eine Verbindungselement (130, 132) mit dem Träger (102, 104) und dem Ständer (126) oder den Trägern (102, 104) durch Verschrauben verbindbar ist.

12. Maschinenrahmen nach einem der Ansprüche 1 bis 11,
**dadurch gekennzeichnet, dass** ein unterer im Wesentlichen horizontal verlaufender Längsträger (102a) des Maschinenrahmens (100) um eine vorbestimmte Distanz (d) zur Längsmitte (100b) des Maschinenrahmens (100) versetzt angeordnet ist.

13. Befestigungsanordnung umfassend einen Maschinenrahmen (100) nach einem der Ansprüche 9 bis 12 und wenigstens ein Befestigungselement (152, 252, 352) zur Befestigung einer Funktionsbaugruppe (108) an einem Profilelement (110) durch Eingriff in wenigstens ein Montageloch (124),
wobei das Befestigungselement (152) wenigstens ein Haken teil (154) mit einem Durchgriffsabschnitt (154a) und einem Hakenabschnitt (154b) umfasst,
wobei der Durchgriffsabschnitt (154a) dazu bestimmt ist, das Montageloch (124) zu durchsetzen, und eine Höhe (h2) aufweist, die kleiner ist als die Höhe (h1) des Montagelochs (124),
wobei der Hakenabschnitt (154b) dazu bestimmt ist, das Montageloch (124) zu hintergreifen und eine vorbestimmte Höhe (h3) aufweist,
wobei die Summe der Höhe (h2) des Durchgriffsabschnitts (154a) und der Höhe (h3) des Hakenabschnitts (154b) größer ist als die Höhe (h1) des Montagelochs (124),
wobei der wenigstens eine Hakenteil (154) ferner eine Anlagefläche (154b1) aufweist, die dazu bestimmt ist, mit einer ersten Anlagefläche (110a) des Profilelements (110) in Anlageeingriff zu treten,
wobei das Befestigungselement (152) wenigstens ein Klemmteil (156) umfasst, das mit dem wenigstens einen Hakenteil (154) zusammenwirkt und relativ zu diesem zwischen einer Klemmstellung und einer Lösestellung verstellbar ist, und
wobei das wenigstens eine Klemmteil (156) dazu bestimmt ist, in der Klemmstellung mit einer zweiten Anlagefläche (110b) des Profilelements (110) derart in Anlageeingriff zu treten, dass die Anlagefläche (154b1) des wenigstens einen Hakenteils (154) mit der ersten Anlagefläche (110a) des Profilelements (110) in Anlageeingriff tritt und somit den Eingriff des Durchgriffsabschnitts (154a) in das Montageloch (124) und das Hintergreifen des Montagelochs (124) durch den Hakenabschnitt (154b) sichert.

14. Befestigungsanordnung nach Anspruch 13,
**dadurch gekennzeichnet, dass** an einem Basisteil (158) des Befestigungselements (152) eine Anlagefläche (158a) vorgesehen ist, die mit einer dritten Anlagefläche (110c) des Profilelements (110) in Anlageeingriff tritt,
wobei vorzugsweise die dritte Anlagefläche (110c) des Profilelements (110) auf der gleichen Seite des Profilelements (110) wie die zweite Anlagefläche (110b) angeordnet ist, und
wobei weiter bevorzugt die dritte Anlagefläche (110c) des Profilelements (110) und die erste Anlagefläche (110a) auf voneinander wegweisenden Seiten des Montagelochs (124) angeordnet sind.

15. Befestigungsanordnung nach Anspruch 13 oder 14,
**dadurch gekennzeichnet, dass** das Befestigungselement (252; 352) eine Mehrzahl von Hakenteilen (254) oder/und eine Mehrzahl von Klemmteilen (356) umfasst.

## Geänderte Patentansprüche

### Geänderte Patentansprüche gemäss Regel 137(2) EPÜ.

1. Maschinenrahmen (100), insbesondere für eine Verpackungsmaschine, umfassend eine Mehrzahl von Trägern (102, 104), nämlich wenigstens einen Längsträger (102) und wenigstens einen Querträger (104),
wobei wenigstens einer der Träger (102, 104) von einem Profilelement (110) mit einem offenen Profil gebildet ist,
**dadurch gekennzeichnet, dass** sich der Profilquerschnitt des offenen Profils über wenigstens 40%, vorzugsweise wenigstens 50%, seiner Gesamtlänge in im Wesentlichen vertikaler Richtung erstreckt.

2. Maschinenrahmen nach Anspruch 1,
**dadurch gekennzeichnet, dass** das Profilelement (110) aus Metallblech gefertigt ist.

3. Maschinenrahmen nach Anspruch 1 oder 2,
**dadurch gekennzeichnet, dass** das Profilelement (110) aus einem Biegeprofil hergestellt ist.

4. Maschinenrahmen nach einem der Ansprüche 1 bis 3,
**dadurch gekennzeichnet, dass** der Querschnitt des Profils an einer zum Innenraum (100a) der Maschine weisenden Seite (I) einen sich im Wesentlichen horizontal erstreckenden Auflagesteg (112) aufweist,
wobei vorzugsweise sich an das innere Ende (112a) des Auflagestegs (112) ein sich im Wesentlichen vertikal erstreckender Steg (innerer Vertikalsteg) (114) anschließt oder/und sich an das äußere Ende (112b) des Auflagestegs (112) ein sich im Wesentlichen vertikal erstreckender Steg (äußerer Vertikalsteg) (116) anschließt.

5. Maschinenrahmen nach einem der Ansprüche 1 bis 4,
**dadurch gekennzeichnet, dass** das Profil an seinem oberen Ende (110o) einen schräg nach unten und außen verlaufender Steg (118) aufweist.

6. Maschinenrahmen nach einem der Ansprüche 1 bis 5,
**dadurch gekennzeichnet, dass** das Profil an seinem unteren Ende (110u) einen sich im Wesentlichen vertikal erstreckenden Steg (unterer Vertikalsteg) (122) aufweist.

7. Maschinenrahmen nach Anspruch 6,
**dadurch gekennzeichnet, dass** der äußere Vertikalsteg (116) und der untere Vertikalsteg (122) in vertikaler Richtung im Wesentlichen zueinander fluchtend angeordnet sind oder/und dass der innere Vertikalsteg (114) und der untere Vertikalsteg (122) durch einen schräg nach unten und außen verlaufender Steg (120) verbunden sind.

8. Maschinenrahmen nach Anspruch 6 oder 7,
**dadurch gekennzeichnet, dass** der Auflagesteg (112) oder/und der äußere Vertikalsteg (116) oder/und der untere Vertikalsteg (122) eine Mehrzahl von Montagelöchern (124) aufweist, vorzugsweise ein sich über die gesamte Länge des Trägers (102, 104) erstreckendes Lochraster.

9. Maschinenrahmen nach einem der Ansprüche 1 bis 8,
ferner umfassend wenigstens einen in Höhenrichtung (H) des Maschinenrahmens verlaufenden Ständer (106),
**dadurch gekennzeichnet, dass** wenigstens einer der Ständer (106), vorzugsweise alle Ständer (106), von einem Metallwinkelblech gebildet ist.

10. Maschinenrahmen nach einem der Ansprüche 1 bis 11,
**dadurch gekennzeichnet, dass** wenigstens ein Verbindungselement (130, 132), welches zur Verbindung eines Trägers (102, 104) mit einem Ständer (106) oder einem anderen Träger (102, 104) dient, vorzugsweise alle diese Verbindungselemente (130, 132), aus elektrisch leitfähigem Material gefertigt ist bzw. sind,
wobei vorzugsweise das wenigstens eine Verbindungselement (130, 132) mit dem Träger (102, 104) und dem Ständer (126) oder den Trägern (102, 104) durch Verschrauben verbindbar ist.

11. Maschinenrahmen nach einem der Ansprüche 1 bis 10,
**dadurch gekennzeichnet, dass** ein unterer im Wesentlichen horizontal verlaufender Längsträger (102a) des Maschinenrahmens (100) um eine vorbestimmte Distanz (d) zur Längsmitte (100b) des Maschinenrahmens (100) versetzt angeordnet ist.

12. Befestigungsanordnung umfassend einen Maschinenrahmen (100) nach einem der Ansprüche 8 bis 11 und wenigstens ein Befestigungselement (152, 252, 352) zur Befestigung einer Funktionsbaugruppe (108) an einem Profilelement (110) durch Eingriff in wenigstens ein Montageloch (124),
wobei das Befestigungselement (152) wenigstens ein Haken teil (154) mit einem Durchgriffsabschnitt (154a) und einem Hakenabschnitt (154b) umfasst,
wobei der Durchgriffsabschnitt (154a) dazu bestimmt ist, das Montageloch (124) zu durchsetzen, und eine Höhe (h2) aufweist, die kleiner ist als die Höhe (h1) des Montagelochs (124),
wobei der Hakenabschnitt (154b) dazu bestimmt ist, das Montageloch (124) zu hintergreifen und eine vorbestimmte Höhe (h3) aufweist,
wobei die Summe der Höhe (h2) des Durchgriffsabschnitts (154a) und der Höhe (h3) des Hakenabschnitts (154b) größer ist als die Höhe (h1) des Montagelochs (124),
wobei der wenigstens eine Hakenteil (154) ferner eine Anlagefläche (154b1) aufweist, die dazu bestimmt ist, mit einer ersten Anlagefläche (110a) des Profilelements (110) in Anlageeingriff zu treten,
wobei das Befestigungselement (152) wenigstens ein Klemmteil (156) umfasst, das mit dem wenigstens einen Hakenteil (154) zusammenwirkt und relativ zu diesem zwischen einer Klemmstellung und einer Lösestellung verstellbar ist, und
wobei das wenigstens eine Klemmteil (156) dazu bestimmt ist, in der Klemmstellung mit einer zweiten Anlagefläche (110b) des Profilelements (110) derart in Anlageeingriff zu treten, dass die Anlagefläche (154b1) des wenigstens einen Hakenteils (154) mit der ersten Anlagefläche (110a) des Profilelements (110) in Anlageeingriff tritt und somit den Eingriff des Durchgriffsabschnitts (154a) in das Montageloch (124) und das Hintergreifen des Montagelochs (124) durch den Hakenabschnitt (154b) sichert.

13. Befestigungsanordnung nach Anspruch 12,
**dadurch gekennzeichnet, dass** an einem Basisteil (158) des Befestigungselements (152) eine Anlagefläche (158a) vorgesehen ist, die mit einer dritten Anlagefläche (110c) des Profilelements (110) in Anlageeingriff tritt,
wobei vorzugsweise die dritte Anlagefläche (110c) des Profilelements (110) auf der gleichen Seite des Profilelements (110) wie die zweite Anlagefläche (110b) angeordnet ist, und
wobei weiter bevorzugt die dritte Anlagefläche (110c) des Profilelements (110) und die erste Anlagefläche (110a) auf voneinander wegweisenden Seiten des Montagelochs (124) angeordnet sind.

14. Befestigungsanordnung nach Anspruch 12 oder 13,
**dadurch gekennzeichnet, dass** das Befestigungselement (252; 352) eine Mehrzahl von Hakenteilen (254) oder/und eine Mehrzahl von Klemmteilen (356) umfasst.
